# EUROPEAN PATENT SPECIFICATION

(11) **EP 2 002 752 B1**
(45) Date of publication and mention of the grant of the patent: **06.07.2011**
(21) Application number: 08009738.9
(22) Date of filing: 28.05.2008
(51) Int. Cl.: A45D 20/12

(54) **A heat blower**
Wärmegebläse
Souffleur de chaleur

(30) Priority: 14.06.2007 JP 2007157909
(43) Date of publication of application: 17.12.2008
(73) Proprietor: Panasonic Electric Works Co., Ltd., Kadoma-shi Osaka (JP)
(72) Inventor: Tanaka, Hideki, Kadoma-shi Osaka 571-8686 (JP); Ishikawa, Tomoya, Kadoma-shi Osaka 571-8686 (JP)
(74) Representative: Appelt, Christian W.

(56) References cited:
- WO-A1-01/87108
- US-A- 5 810 911

## Description

### TECHNICAL FIELD

The invention relates generally to heat blowers and more particularly to a heat blower such as a hair dryer, a warm air blower or the like.

### BACKGROUND ART

A heat blower such as a hair dryer or a warm air blower includes an air passage, a fan and a heater. The air passage has an inlet and an outlet. The fan is put in the air passage and goes round to create a flow of air from the inlet to the outlet. The heater is also put in the air passage and heats the air flowing in the air passage. The heated air flows out from the outlet.

This sort of heat blower is often equipped with a filter that is located at the inlet in order to remove contaminants such as dirt, dust, a hair(s) and the like so that the contaminants cannot enter the air passage. In some hair dryers, a grid (e.g., a perforated panel) with holes of several millimeters diameter has been employed as such a filter. The grid is made of metal or synthetic resin to have shape retentive properties (rigidity, semi-rigidity or flexibility) in order to prevent the filter from being damaged even if the dryer having the filter drops out of a user's hand.

However, since the filter has such large holes, the fan inevitably sucks dirt and dust together with air though the inlet. Accordingly, the motor of the fan and the heater may be damaged.

A hair dryer described in Japanese Patent Application Publication No. H06-046919 published on February 22, 1994 has an intermediate filter covering an inlet and an outer filter covering the intermediate filter. Though a hole size of the intermediate filter is almost the same as that of the outer filter, the filters are formed so that the total opening area of the intermediate filter is smaller than that of the outer filter. Or the filters are arranged so that the lines of the filters cross each other to form smaller holes. However, since the hole size of the intermediate filter is almost the same as that of the outer filter, it is hard to prevent the fan from sucking fine dust and the like through the inlet. In addition, even if the filters form the smaller holes, it is necessary to narrow the widths of four lines surrounding each large hole in order to make the smaller holes. As a result, an open area ratio is more increased and the strength is reduced.

From document WO 01/87108 A1 a further hair drying device with a three-dimensional filter comprising a heat blower and a first and a second filter is known.

Furthermore, US 5,810,910 discloses a filter device for an air-moving hair care appliance and a filter element with an open area enabling the passage of air being the amount of 30 % to 60 % of the total area of the filter element.

### DISCLOSURE OF THE INVENTION

It is an object of the present invention to prevent a fan from sucking contaminants such as dirt, dust and the like through an inlet without reduction in gas volume out of an outlet and strength of filters.

This object is solved by a heat blower according to claim 1, claims 2 and 3 relate to specifically advantageous realizations of the heat blower according to claim 1.

A heat blower of the present invention comprises: an air passage having an inlet and an outlet; and a fan and a heater which are put in the air passage. In an aspect of the invention, the blower further comprises: a first filter which covers at least the inlet; and a second filter with a mesh structure, which is located between the first filter and the inlet so that the second filter covers at least the inlet. The second filter has a mesh opening width in the range from 300 to 650 µm, and also an open area ratio in the range from 55 to 90%.

In this invention, the second filter has a mesh opening width in the range from 300 to 650µm, and accordingly can remove fine contaminants such as dart, dust and the like. In addition, since the second filter has an open area ratio in the range from 55 to 90%, reduction in gas volume out of the outlet and strength of the filters, especially the second filter can be avoided. Therefore, it is possible to prevent the fan from sucking contaminants such as dart, dust and the like through the inlet without reduction in gas volume out of the outlet and strength of the filters.

In an embodiment, the first filter has a honeycomb structure, and also has an open area ratio in the range from 50 to 75%. Preferably, the first filter is made of metal plate. In this case, the first filter can properly protect the second filter.

According to the invention, the heat blower further comprises a third filter covered with the first and second filters. The third filter is attached to the inlet so that the third filter covers the inlet, while the first and second filters can be attached to and detached from the inlet side. In the invention the second filter can be easily cleaned. In addition, even if the first and second filters are detached from the inlet side, the third filter covers the inlet and accordingly safety can be secured.

According to the invention the heat blower further comprises a housing and a frame. The air passage is put in the housing. The housing has an inflow opening and an outflow opening where the inlet and the outlet are located, respectively. The first and second filters are attached to the frame. The frame can be attached to and detached from the inflow opening, and also has a ring-shaped groove and mounting holes formed in the groove. The first filter comprises a base, at least a side inserted into the groove, and engagement pieces. The engagement pieces are bent outward from the edge of the side and respectively inserted into the mounting holes to be fixed to the frame. The frame has barriers which are formed at the rear of the frame and surrounds the engagement pieces, respectively. In this embodiment, the sides of the first filter are inserted into the groove and the engagement pieces inserted into the mounting holes are surrounded with the barriers. Accordingly, the edges of the first filter can be concealed form a user.

### BRIEF DESCRIPTION OF THE DRAWINGS

Preferred embodiments of the invention will now be described in further details. Other features and advantages of the present invention will become better understood with regard to the following detailed description and accompanying drawings where:
FIG. 1 is a longitudinal sectional view of a heat blower in accordance with an embodiment of the present invention;
FIG. 2 is a perspective view of the embodiment;
FIG. 3 is a perspective view of a frame and first and second filters in the embodiment;
FIG. 4 is an enlarged sectional view of the second filter;
FIG. 5 is a longitudinal sectional view of the embodiment;
FIG. 6 is a front view of the frame having the first and second filters;
FIG. 7 is a rear view of the frame having the first and second filters;
FIG. 8 is a sectional view of the frame having the first and second filters;
FIG. 9 is a sectional view of part of the frame having the first and second filters;
FIGS. 10A shows a plot of gas volume following mesh opening width;
FIGS. 10B shows a plot of gas volume following open area ratio; and
FIG. 11 is a longitudinal sectional view of a heat blower in an embodiment.

### BEST MODE FOR CARRYING OUT THE INVENTION

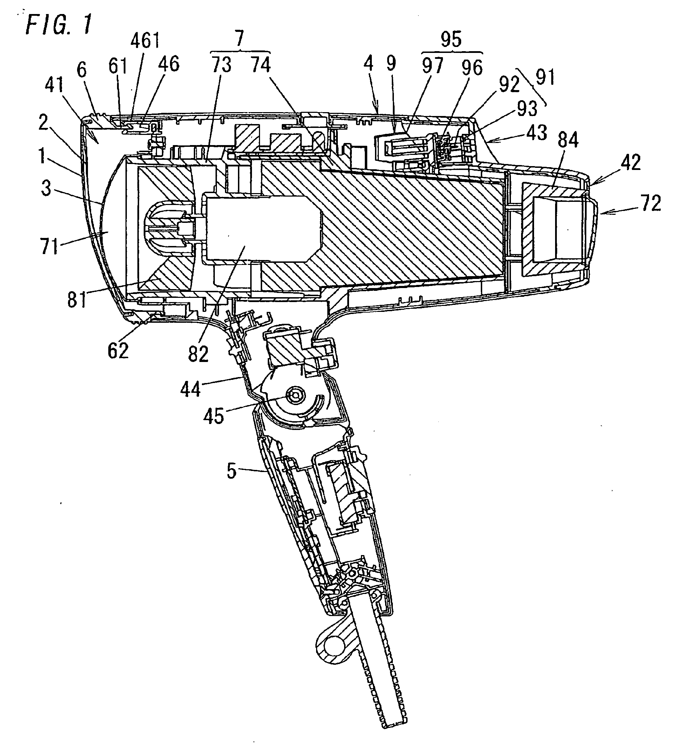

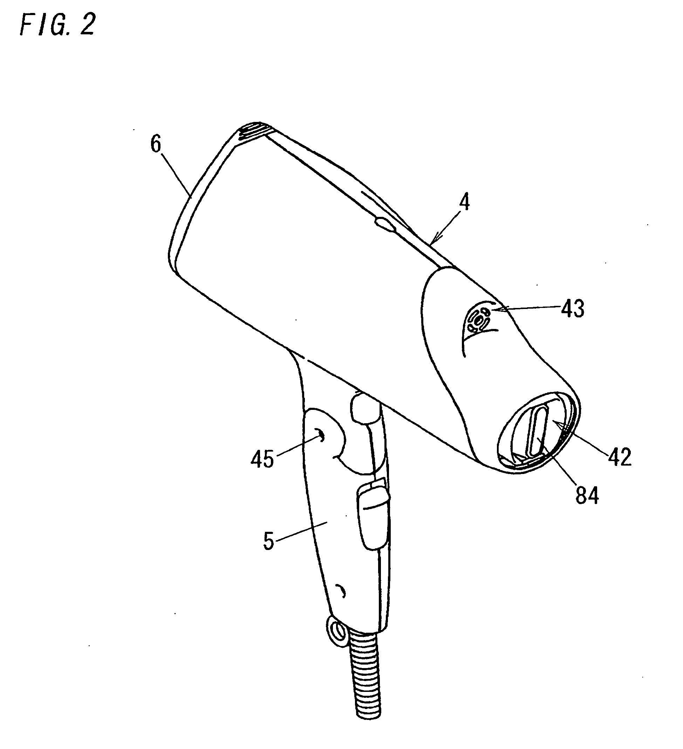

FIG. 1 shows a heat blower (hair dryer) in accordance with an embodiment of the present invention. The hair dryer illustrated in FIGS. 1 and 2 includes a cylindrical housing 4 having an inflow opening 41, an outflow opening 42 and a spray opening 43. The inflow opening 41 is located at the rear end of the housing 1. The outflow opening 42 is located at the lower part of the front end of the housing 1, and the spray opening 43 is located at the upper part of the front end, which is a recess set back than the lower part.

The housing 4 also has a pivot base 44 that has a pivot 45 and is branched off from the bottom side of the cylindrical surface of the housing 4.
The pivot base 44 is joined to a grip handle 5 with the pivot 45 so that the handle 5 can turn on the pivot 45. The housing 4 further has a square-shaped frame 6 that can be attached to and detached from the edge of the inflow opening 41.

The housing 4 also accommodates an air passage 7, a fan 81, an electric motor 82, a heater (not shown), a nozzle 84 and an electrostatic atomizer 9. The air passage 7 has an inlet 71 and an outlet 72, and is put in the housing 4. The inlet 71 is located at the inflow opening 41, while the outlet 72 is located at the outflow opening 42. In the embodiment, the air passage 7 is formed of a rear duct 73 located at the inflow opening side and a front duct 74 located at the outflow opening side, which are unified to form a single unit. The fan 81 and the motor 82 are installed in the rear duct 73. The heater is installed inside the front duct 74, and heats the air flowing in the air passage 7. That is, the front duct 74 is put in the housing 4 so that another cylindrical air passage is arranged between the inside of the housing 4 and the outside of the front duct 74. Accordingly, the fan 81 and the motor 82 together create a flow of air from the inlet 71 (inflow opening 41) to the outlet 72 (the outflow opening 42) and the spray opening 43. In this case, the greater part of the flow of air passes through the air passage 7 to flow out from the outlet 72. The rest of the flow of air, which is not heated, flows out from the spray opening 43 through the cylindrical air passage while surrounding a warm current of air heated with the heater. Accordingly, overheating of hair can be prevented. The nozzle 84 is located at the outflow opening 42 so as to divide the greater part of the flow of air (wind) into two currents with two nozzle mouths.

The electrostatic atomizer 9 is located behind the spray opening 43 in the housing 4, and is configured to produce mist (spray) of charged fine water particles by means of electrostatic atomization to spray (discharge) the mist from the opening 43. For example, the atomizer 9 includes a high voltage device 91, a cooling means 95 and so on. The high voltage device 91 is formed of an I-shaped electrostatic atomization electrode 92, a ring-shaped counter electrode 93, and a high voltage generator (not shown). The electrodes 92 and 93 are arranged opposite each other, and the electrode 93 is connected to ground. The high voltage generator is connected with a power supply of the hair dryer, and also configured to apply negative high voltage between the electrodes 92 and 93. The cooling means 95 is connected with the power supply, and configured to cool the electrode 92 to produce condensation water (dew drop) on the electrode 92 from warm water vapor around the electrode 92. For example, the cooling means 95 is formed of a Peltier unit 96, a radiator 97 and so on. The Peltier unit 96 is configured to cool the electrode 92 to form condensation water (drop of water) on the electrode 92. The radiator 97 radiates the heat generated from the Peltier unit 96. The radiator 97 is cooled by the air flowing in the cylindrical air passage.

The negative high voltage is applied to the electrode 92 cooled with the Peltier unit 96 and then the condensation water on the electrode 92 generates Rayleigh splitting in response to electric discharge between the electrodes 92 and 93. As a result, mist of negative charged fine water particles (ions) is produced, and then carried by the air flowing in the cylindrical air passage to be discharged from the spray opening 43.

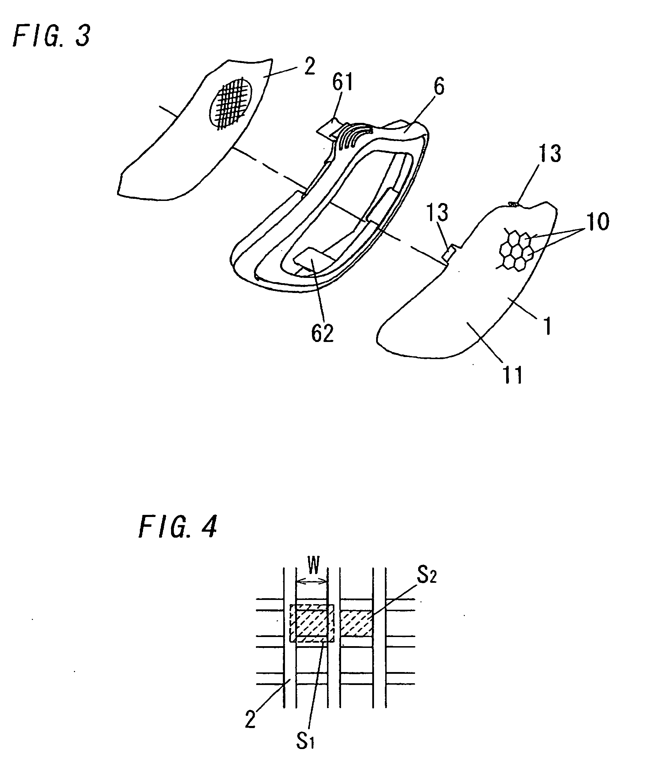

In an aspect of the embodiment, first, second and third filters 1, 2 and 3 are located at the inflow opening41. The filter 1 is a grid made of metal plate such as hot-dip zinc-coated carbon steel sheets (e.g., SGCC) or the like to have shape retentive properties, and has an open area ratio in the range from 50 to 75%. For example, the filter 1 is a perforated panel with a honeycomb structure, which is in the range from 0.5 to 2mm in thickness, and has an opening width (hole diameter) of a little longer than 3mm and a line (crosspiece) width of approximately 0.8mm. Preferably, the filter 1 has hexagonal holes (10) as shown in FIG. 3. In this case, strength of the lines constituting the honeycomb structure can be kept evenly, and the total opening area of the filter 1 can be enlarged.

The filter 2 has a mesh structure and is located between the first filter 1 and the inlet 71. For example, the filter 2 is made of metal material, or preferably from retardant resin such as polyester or the like. As shown in FIG. 4, the filter 2 has a mesh opening width (W) in the range from 300 to 650µm and an open area ratio S₁/S₂ in the range from 55 to 90%. In FIG. 4, S₁ is area of one unit consisted of a mesh hole and four half lines (crosspieces) directly surrounding the hole, and S₂ is area of a mesh hole.

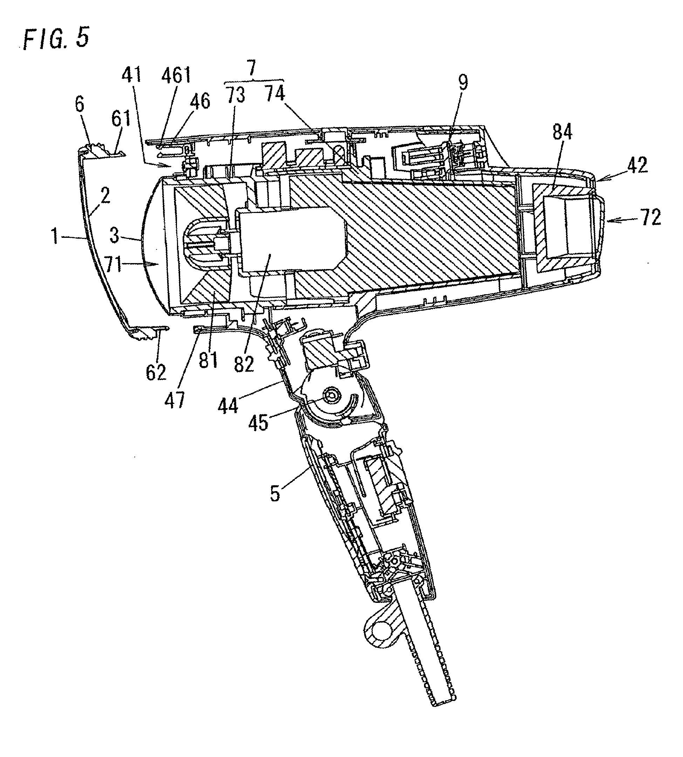

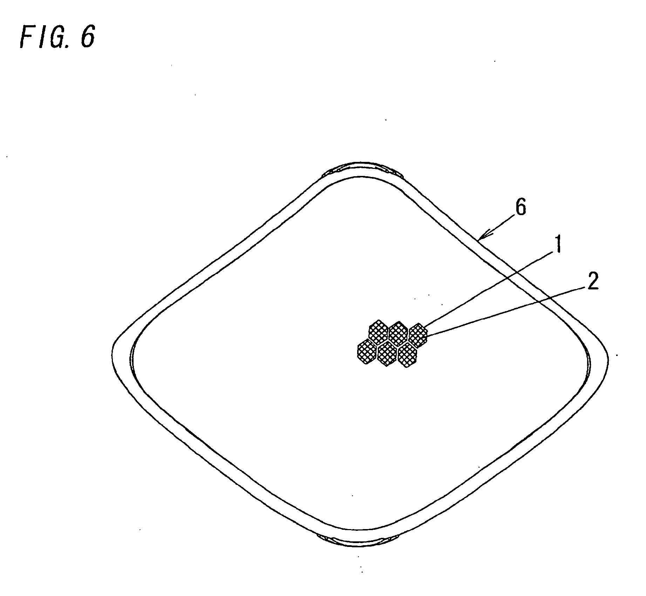

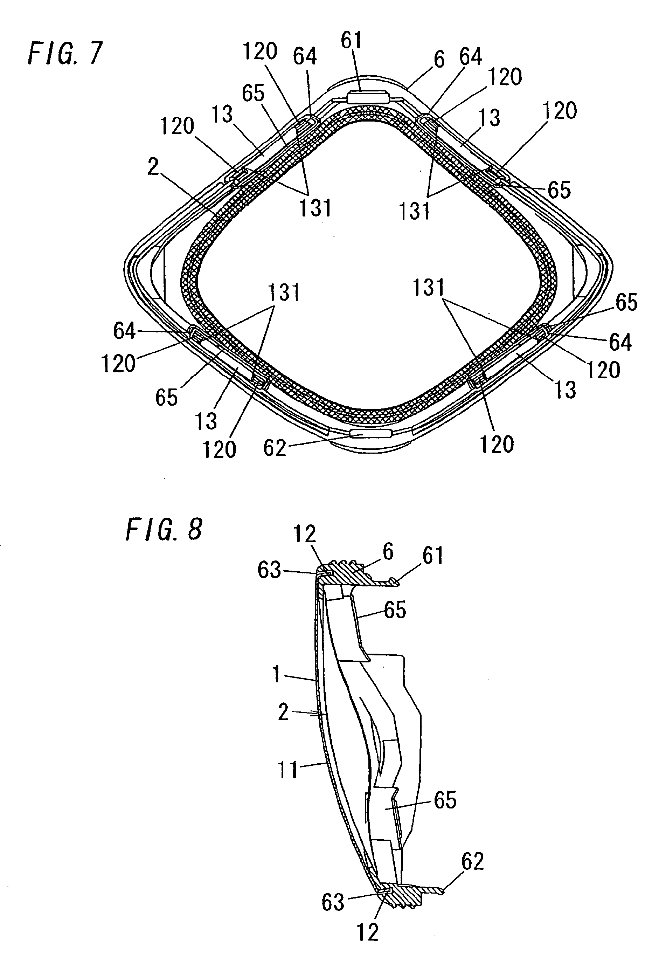

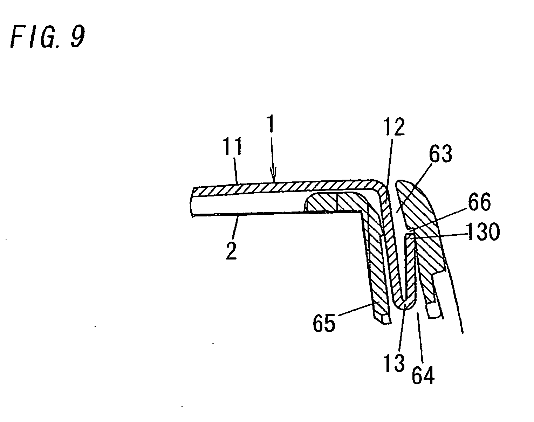

As shown in FIGS. 3 and 5-9, the filters 1 and 2 are attached to the frame 6, which together can be attached to and detached from the inflow opening 41. For example, the frame 6 is made of molding material so that it forms a square (see FIG. 7) and has hook pieces 61 and 62 (FIGS. 3 and 7), a ring-shaped groove 63 (FIG. 8), a plurality of (e.g., four) narrow mounting holes 64 (FIGS. 7 and 9), and a plurality of (e.g., four) barriers 65 (FIGS. 7 and 9). The molding material is synthetic resin of which melting point is lower than that of the filter 2. The hook pieces 61 and 62 are stuck out from two opposite corners in the rear of the frame 6 (FIG. 8), and engaged with hook pieces 461 and 47 located at the inner edge of the inflow opening 41, respectively (FIG. 5). The hook piece 461 is included in a U-shaped separate part 46 attached to the upper inner edge of the inflow opening 41, while the hook piece 47 is formed at the lower inner edge. The groove 63 is formed at the front of the frame 6. The mounting holes 64 are through holes formed in the groove 63. The barriers 65 are formed at the rear of the frame 6, and surround the mounting holes 64, respectively.

For example, as shown in FIGS. 3 and 7-9, the filter 1 has a square base 11, four sides 12 and a plurality of (e.g., four) U or V shaped engagement pieces 13. The engagement pieces 13 are bent outward from the edge of the sides 12. The sides 12 are inserted into the groove 63, while the engagement pieces 13 are respectively inserted into the mounting holes 64 to be fixed to the frame 6. That is, the tips 130 of the engagement pieces 13 are engaged with recesses 66 inside the mounting holes 64, respectively (FIG. 9). In this case, the barriers 65 surround the engagement pieces 13, respectively. Accordingly, each barrier 65 can surround both edges 131 of an engagement piece 13 and the edges 120 between which the engagement piece 13 exists (FIG. 7). The barriers 65 can also enhance the rigidity of the frame 6.

The peripheral edges of the filter 2 is fixed to the rear of the frame 6 by heat welding and thereby the filter 2 is fixed to the frame 6. In an embodiment, each of the first filter, the second filter and the frame of the present invention may be in the shape of a circle, and therefore the first filter may have a ring-shaped side.

The hair dryer further includes a third filter 3 that is made of metal plate to have shape retentive properties and an open area ratio, in the same way as the filter 1. The filter 3 are covered with the first and second filters 1 and 2, and also fixed to the inlet 71 of the air passage 7 so that it covers the inlet 71. The filter 3 is used to secure safety rather than removal of dirt and dust. That is, the filter 3 covers the inlet 71 even if the filters 1 and 2 are detached from the inlet 71 side (i.e., the inflow opening 41) together with the frame 6. Accordingly, the fan 81 in the rear duct 73 is covered with the filter 3.

When the hair dryer is operated, air is sucked into the inlet 71 through the filters 1-3. In the filters, the filter 1 having shape retentive properties protects the filter 2 and the filter 3 secures safety, while the filter 2 functions as an essential filter for removing dirt, dust and so on.

That is, since the filter 2 has the finest mesh opening width (W) in the range from 300 to 650µm, it is possible to remove contaminants such as fine dust, hairs, etc. that the contaminants cannot enter the air passage 7 in which the fan 81, the motor 82 and the heater are put.

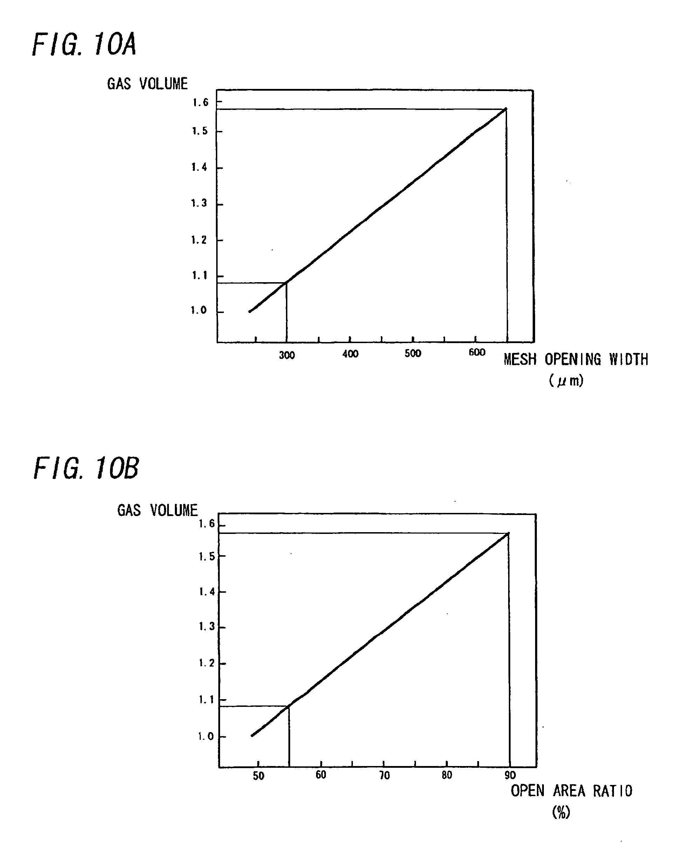

As shown in FIG. 10A, if the mesh opening width (W) of the filter 2 is smaller than 300µm, gas (air) volume is reduced and also the open area ratio is decreased. If the mesh opening width (W) is larger than 650µm, the filter 2 is hard to remove the contaminants.

As shown in FIG. 10B, if the open area ratio of the filter 2 is smaller than 55%, gas volume flown out from the outlet 72 is reduced and thereby reducing the function as the hair dryer. If the open area ratio is larger than 90%, the line width of the filter 2 becomes too narrow and thereby reducing the strength of the filter 2. In this case, the filter 2 is easily torn or broken when brushing the dust off the filter 2 or washing the filter 2.

Preferably, each of the filters 1 and 3 has an open area ratio in the range from 50 to 75%. Since the thickness of the filter 1 is equal to or smaller than 2 mm, it is possible to prevent large noise caused by port noise or interference noise.

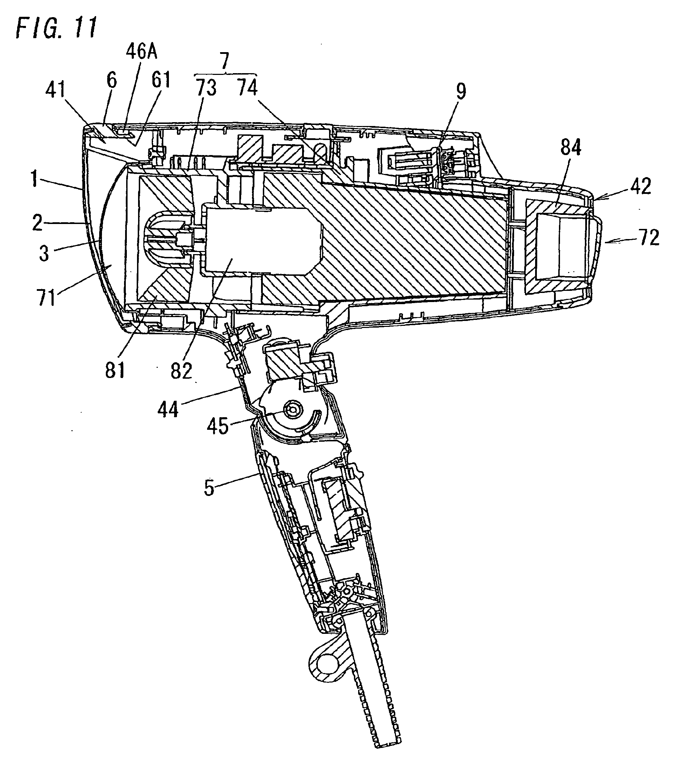

In an embodiment, as shown in FIG. 11, an engagement piece 46A is formed at the upper inner edge of the inflow opening 41 instead of the separate part 46.

Although the present invention has been described with reference to certain preferred embodiments, numerous modifications and variations can be made by those skilled in the art without departing from the scope of the claims.

## Claims

1. A heat blower, comprising: an air passage (7) having an inlet (71) and an outlet (72); and a fan (81) and a heater which are put in the air passage (7);
wherein the blower further comprises:
a first filter (1) which covers at least the inlet (71); and
a second filter (2) with a mesh structure, which is located between the first filter (1) and the inlet (71) so that the second filter (2) covers at least the inlet (71),
wherein the heat blower further comprises a third filter (3) covered with the first and second filters (1 and 2), the third filter (3) being attached to the inlet (71) so that the third filter (3) covers the inlet (71),
wherein the first and second filters (1 and 2) can be attached to and detached from the inlet (71) side,
wherein the heat blower further comprises:
a housing (4) in which the air passage (7) is put and which has an inflow opening (41) and an outflow opening (42) where the inlet (71) and the outlet (72) are located, respectively; and
**characterized in that**
the second filter (2) has a mesh opening width in the range from 300 to 650µm, and
the second filter (2) has an open area ratio in the range from 55 to 90%,
wherein the heat blower further comprises:
a frame (6) to which the first and second filters (1 and 2) are attached and which can be attached to and detached from the inflow opening (41), the frame (6) having a ring-shaped groove (63) and mounting holes (64) formed in the groove (63),
wherein: the first filter (1) comprises a base (11); at least a side (12) inserted into the groove (63); and engagement pieces (13) which are bent outward from the edge of the side (12) and respectively inserted into the mounting holes (64) to be fixed to the frame (6),
wherein the frame (6) has barriers (65) which are formed at the rear of the frame (6) and surrounds the engagement pieces (13), respectively.

2. The heat blower of claim 1, wherein the first filter (1) has a honeycomb structure, the first filter (1) having an open area ratio in the range from 50 to 75%.

3. The heat blower of claim 2, wherein the first filter (1) is made of metal plate.

## Patentansprüche

1. Heißlüfter mit:
einem Luftdurchlass (7) mit einem Einlass (71) und einem Auslass (72); und
einem Fan (81) und einem Heizer, der in dem Luftdurchlass (7) angeordnet ist;
wobei der Lüfter weiter Folgendes umfasst:
einen ersten Filter (1), der zumindest den Einlass (71) abdeckt; und
einen zweiten Filter (2) mit einer Maschenstruktur, der zwischen dem ersten Filter (1) und den Einlass (71) derart angeordnet ist, so dass der zweite Filter (2) zumindest den Einlass (71) abdeckt,
wobei der Heißlüfter weiter Folgendes umfasst:
einen dritten Filter (3), der von dem ersten und zweiten Filter (1 und 2) abgedeckt ist,
wobei der dritte Filter (3) an dem Einlass (71) derart angeordnet ist, dass der dritte Filter (3) den Einlass (71) abdeckt,
wobei der erste und zweite Filter (1 und 2) an der Einlassseite (71) angebracht und entfernt werden können,
wobei der Heißlüfter weiter Folgendes umfasst:
ein Gehäuse (4), in welchem der Luftdurchlass (7) angeordnet ist und welches eine Einflussöffnung (41) und eine Ausflussöffnung (42) dort aufweist, wo der Einlass (71) und der Auslass (72) entsprechend angeordnet sind;
**dadurch gekennzeichnet, dass**
der zweite Filter (2) eine Maschenöffnungsbreite im Bereicht von 300 bis 650 µm aufweist, und
der zweite Filter (2) ein Öffnungsflächenverhältnis im Bereich von 55 bis 90% aufweist,
wobei der Heißlüfter weiter Folgendes umfasst:
einen Rahmen (6), an welchem der erste und zweite Filter (1 und 2) angebracht sind und welcher an der Einflussöffnung (41) angebracht und entfernt werden kann, der Rahmen (6) hat eine ringförmige Ausnehmung (63) und Befestigungslöcher (64), die in der Ausnehmung (63) ausgebildet sind;
wobei der erste Filter (1) Folgendes aufweist: einen Sockel (11); zumindest eine Seite (12), die in die Ausnehmung (63) eingesetzt ist; und ein Befestigungselemente (13), welches von dem Rand der Seite (12) nach außen gebogen ist und entsprechend in die Befestigungslöcher (64) eingesetzt ist, um an dem Rahmen (6) fixieren zu werden,
wobei der Rahmen (6) Barrieren (65) aufweist, die an der Rückseite des Rahmens (6) ausgebildet sind und die Befestigungselemente (13) entsprechend umgeben.

2. Heißlüfter nach Anspruch 1, wobei der erste Filter (1) eine Honigwabenstruktur aufweist, der erste Filter (1) ein Öffnungsflächenverhältnis im Bereich von 50 bis 75 % aufweist.

3. Heißlüfter nach Anspruch 2, wobei der erste Filter (1) durch eine Metallplatte gebildet ist.

## Revendications

1. Souffleur de chaleur comprenant : un passage d'air (7) ayant une entrée (71) et une sortie (72) ; et un ventilateur (81) et un dispositif de chauffage qui sont placés dans le passage d'air (7) ;
dans lequel le souffleur comprend en outre :
un premier filtre (1) qui recouvre au moins l'entrée (71) ; et
un deuxième filtre (2) avec une structure de maille, qui est positionné entre le premier filtre (1) et l'entrée (71) de sorte que le deuxième filtre (2) recouvre au moins l'entrée (71),
dans lequel le souffleur de chaleur comprend en outre un troisième filtre (3) recouvert avec les premier et deuxième filtres (1 et 2), le troisième filtre (3) étant fixé sur l'entrée (71) de sorte que le troisième filtre (3) recouvre l'entrée (71),
dans lequel les premier et deuxième filtres (1 et 2) peuvent être fixés sur et détachés du côté de l'entrée (71),
dans lequel le souffleur de chaleur comprend en outre :
un boîtier (4) dans lequel le passage d'air (7) est placé et qui a une ouverture d'entrée (41) et une ouverture de sortie (42) où l'entrée (71) et la sortie (72) sont positionnées, respectivement ; et
**caractérisé en ce que** :
le deuxième filtre (2) a une largeur d'ouverture de maille de l'ordre de 300 à 650 µm, et
le deuxième filtre (2) a un rapport de surface ouverte de l'ordre de 55 à 90%,
dans lequel le souffleur de chaleur comprend en outre :
un châssis (6) auquel les premier et deuxième filtres (1 et 2) sont fixés et qui peuvent être fixés à et détachés de l'ouverture d'entrée (41), le châssis (6) ayant une rainure de forme annulaire (63) et des trous de montage (64) formés dans la rainure (63),
dans lequel : le premier filtre (1) comprend une base (11) ; au moins un côté (12) inséré dans la rainure (63) ; et des pièces de mise en prise (13) qui sont pliées vers l'extérieur à partir du bord du côté (12) et respectivement insérées dans les trous de montage (64) pour être fixées au châssis (6),
dans lequel le châssis (6) a des barrières (65) qui sont formées à l'arrière du châssis (6) et entoure les pièces de mise en prise (13), respectivement.

2. Souffleur de chaleur selon la revendication 1, dans lequel le premier filtre (1) a une structure en nids d'abeille, le premier filtre (1) ayant un rapport de surface ouverte de l'ordre de 50 à 75%.

3. Souffleur de chaleur selon la revendication 2, dans lequel le premier filtre (1) est réalisé à partir d'une plaque métallique.
